Europäisches Patentamt

European Patent Office

Office européen des brevets

(19)

(11) Veröffentlichungsnummer: **0 102 005**
A2

(12) **EUROPÄISCHE PATENTANMELDUNG**

(21) Anmeldenummer: 83107943.9

(22) Anmeldetag: 11.08.83

(51) Int. Cl.³: **B 60 C 9/20**

(30) Priorität: 25.08.82 DE 3231548

(43) Veröffentlichungstag der Anmeldung:
07.03.84 Patentblatt 84/10

(84) Benannte Vertragsstaaten:
DE FR GB IT

(71) Anmelder: METZELER KAUTSCHUK GMBH
Gneisenaustrasse 15
D-8000 München 50(DE)

(72) Erfinder: Kronthaler, Peter, Dr.
Alte Allee 56
D-8000 München 60(DE)

(72) Erfinder: Wilkening, Konrad
Schulstrasse 66
D-8032 Gräfelfing(DE)

(74) Vertreter: Michelis, Theodor, Dipl.-Ing.
Gneisenaustrasse 15
D-8000 München 50(DE)

(54) Luftreifen für Zweiradfahrzeuge.

(57) Ein Luftreifen für Zweiradfahrzeuge, insbesondere für Motorräder, weist eine mehrlagige Diagonalkarkasse, gegebenenfalls einen mehrlagigen, insbesondere zweilagigen Gürtel auf der Diagonalkarkasse und eine Lauffläche auf; unter der Lauffläche, also auf der Diagonalkarkasse oder auf dem Gürtel, befinden sich zwei umlaufende, zur Reifenmitte symmetrisch angeordnete Verstärkungsstreifen aus Cordmaterial, deren Fäden in einem Winkel von 10 bis 35° zur Umfangsrichtung verlaufen. Als Material für diese zusätzliche Cordbahn können Aramid-Fasern, Polyamid-Fasern, Kunstseide, Polyester oder Stahlcord verwendet werden. Gegebenenfalls ist auf diesen beiden Verstärkungsstreifen symmetrisch zur Reifenmitte noch mindestens eine Cordbahn angeordnet, deren Fäden in einem Winkel von 0 bis 5°, insbesondere von 0°, zur Umfangsrichtung verlaufen. Als Material für diese zusätzliche Cordbahn kommen die oben angegebenen Materialien in Frage.

FIG. 1

EP 0 102 005 A2

METZELER KAUTSCHUK GMBH           München, 5.8.1983
München                          Unser Zeichen: MK 130 P 82 EP

Luftreifen für Zweiradfahrzeuge

Die Erfindung betrifft einen Luftreifen für Zweiradfahrzeuge, insbesondere Motorräder, der im Oberbegriff des Anspruchs 1 angegebenen Gattung.

Die üblichen Motorradreifen weisen eine mehrlagige Diagonalkarkasse sowie eine Lauffläche auf; als Alternative hierzu sind noch Motorradreifen bekannt, bei denen auf einer mehrlagigen, insbesondere zweilagigen Diagonalkarkasse ein mehrlagiger, insbesondere zweilagiger Gürtel angeordnet ist; ein solcher Reifen wird auch als "bias belted" bezeichnet.

Ein wesentliches Problem bei der Entwicklung von Motorradreifen liegt darin, einen solchen Motorradreifen so auszugestalten, daß er einwandfrei geradeaus läuft, und zwar ohne die sonst üblichen, periodischen Pendelbewegungen um die Hochachse des Motorrades. Diese Pendelbewegungen beeinträchtigen die Fahrstabilität, so daß insbesondere ungeübte Fahrer häufig Probleme haben.

Der Erfindung liegt deshalb die Aufgabe zugrunde, einen Luftreifen für Zweiradfahrzeuge, insbesondere für Motorräder, der angegebenen Gattung zu schaffen, bei dem die oben erwähnten Probleme nicht auftreten.

Insbesondere soll ein Luftreifen vorgeschlagen werden, der das Fahrverhalten im Sinne einer Stabilisierung verbessert.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen auf einer Entkopplung der Wirkungen der beiden Hälften eines Luftreifens durch eine Trennung der von den beiden Reifenhälften herrührenden Wirkungen in der Mitte; denn durch die Verwendung von symmetrisch zur Reifenmitte angeordneten Verstärkungsstreifen mit dem angegebenen Aufbau ergibt sich ein "eingebauter Winkeleffekt", der wiederum zur Erzeugung einer Vorspannung und damit von Seitenkräften führt. Diese zusätzlichen Kräfte kompensieren wiederum die Kräfte, die zum Auftreten der oben erwähnten Pendelbewegung führen, so daß sich eine merkliche Verbesserung des Geradeauslaufs und damit des Fahrverhaltens ergibt.

Weiterhin ist durch die erzielbare, starke Krümmung der Lauffläche auch die Verarbeitung von Stahlcord möglich, wodurch die damit verbundenen Vorteile genutzt werden können.

Die Verstärkungsstreifen können aus Aramid-,Polyester-, Kunstseide- oder Polyamid-Cord sowie Stahlcord hergestellt werden.

Besonders gute Ergebnisse lassen sich erzielen, wenn die Fäden der Verstärkungsstreifen in einem Winkel von etwa 25° zur Reifenmitte verlaufen.

Nach einer bevorzugten Ausführungsform wird über den Verstärkungsstreifen, also zwischen Verstärkungsstreifen und Lauffläche, symmetrisch zur Reifenmitte mindestens eine weitere Cordbahn angeordnet, deren Fäden in einem Winkel von 0 bis 5 °, insbesondere 0°, zur Umfangsrichtung verlaufen. Die damit erzielten Vorteile werden im Detail in der am gleichen Tag hinterlegten, schwebenden Patentanmeldung der Anmelderin erläutert.

Die Erfindung wird im folgenden anhand von Ausführungsbeispielen unter Bezugnahme auf die beiliegenden, schematischen Zeichnungen näher erläutert. Es zeigen

Fig. 1 eine Draufsicht auf eine Ausführungsform eines erfindungsgemäßen Luftreifens, jedoch ohne Lauffläche,

Fig. 2 eine Draufsicht auf eine weitere Ausführungsform eines erfindungsgemäßen Luftreifens, ebenfalls ohne Lauffläche,

Fig. 3 einen Schnitt durch die Ausführungsform nach den Figuren 1 und 2, und

Fig. 4 einen Schnitt durch eine weitere Ausführungsform eines erfindungsgemäßen Luftreifens.

Der allgemein durch das Bezugszeichen 10 angedeutete Luftreifen für Zweiräder, insbesondere für Motorräder, weist einen Unterbau 12 auf, der entweder aus der üblichen, mehrlagigen Diagonalkarkasse oder aus einer mehrlagigen, insbesondere zweilagigen Diagonalkarkasse besteht, auf der sich ein mehrlagiger, insbesondere zweilagiger Gürtel (nicht dargestellt) befindet.

Auf diesem Unterbau 12 sind symmetrisch zur Reifenmitte 18 zwei Verstärkungsstreifen 14 und 16 aus Cordmaterial angeordnet, deren in den Figuren schematisch angedeutete Fäden in einem Winkel von etwa 25° zur Umfangsrichtung verlaufen. Die Verstärkungsstreifen 14 und 16 erstrecken sich maximal vom Zenit des Reifens, also der Reifenmitte 18, bis zu den Schultern des Unterbaus 12, also beispielsweise der Diagonalkarkasse.

Das Cordmaterial der Verstärkungsstreifen 14 und 16 kann aus Aramid-Fasern, wie sie unter der Bezeichnung "KEVLAR" angeboten werden, aus Polyamid-Fasern, wie sie unter der Bezeichnung "NYLON " angeboten werden, aus Kunstseide, wie sie unter der Bezeichnung "REYON"angeboten werden, aus Polyester oder aus Stahlcord hergestellt werden.

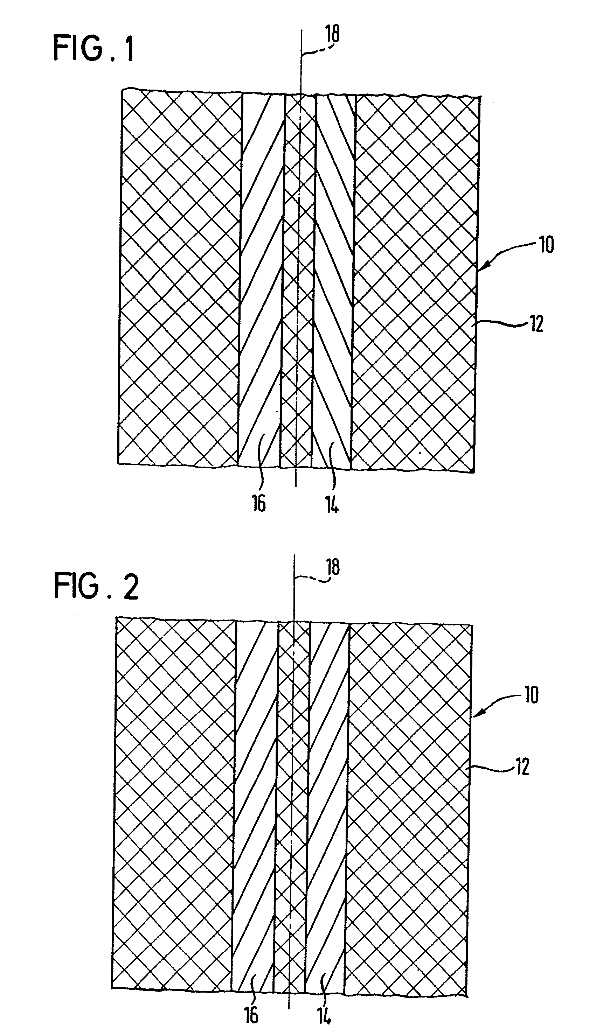

Bei der Ausführungsform nach Fig. 1 sind zwei Verstärkungsstreifen 14 und 16 symmetrisch zur Reifenmitte 18 angeordnet; die Fäden der Verstärkungsstreifen 14 und 16 haben jeweils den gleichen Winkel zueinander, wobei die Fäden des einen Verstärkungsstreifens14 spiegelsymmetrisch zu den Fäden des anderen Verstärkungsstreifens 16 verlaufen, also in umgekehrter Richtung.

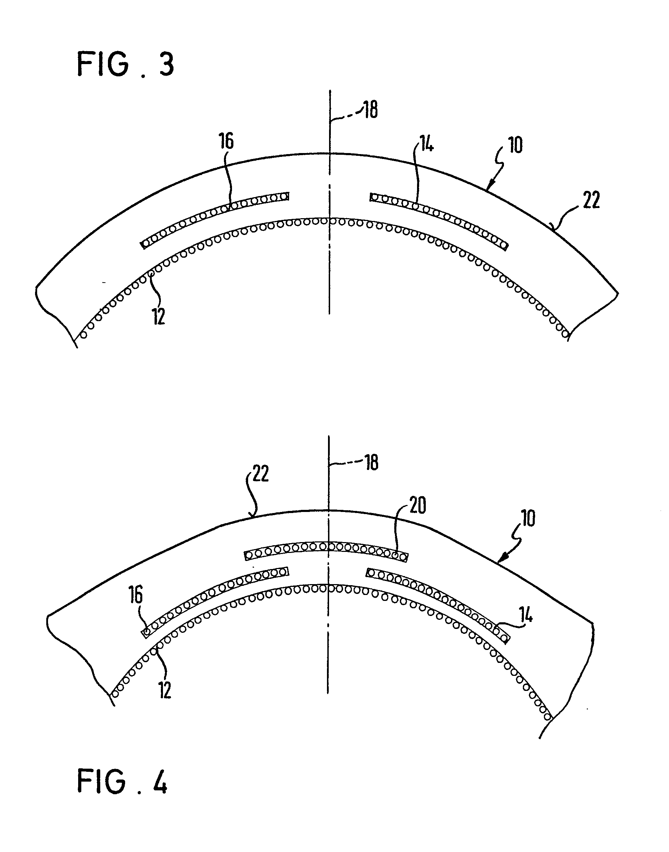

Bei der Ausführungsform nach Fig. 2 haben die Fäden der beiden Verstärkungsstreifen 14 und 16 ebenfalls gleiche Winkel; andererseits verlaufen jedoch die Fäden, anders als beim Ausführungsbeispiel nach Fig. 1, in der gleichen Richtung.

Der Prinzipaufbau ist in Fig. 3 im Schnitt dargestellt , wobei der Unterbau 12, die beiden, symmetrisch zur Reifenmitte 18 liegenden Verstärkungsstreifen 14 und 16 und die Lauffläche 22 zu erkennen sind, die sich auf den Verstärkungsstreifen 14 und 16 befindet.

Als Alternative zu den dargestellten Ausführungsformen ist es auch noch möglich, daß sich die beiden Verstärkungsstreifen 14 und 16 in der Reifenmitte 18 zumindest teilweise überlappen.

Fig. 4 zeigt schließlich eine Ausführungsform eines solchen Luftreifens, bei dem über den Verstärkungsstreifen 14 und 16, also zwischen den Verstärkungsstreifen 14 und 16 und der Lauffläche 22, symmetrisch zur Reifenmitte 18 eine weitere Cordbahn 20 angeordnet ist, deren Fäden in einem Winkel von 0 bis 5°, insbesondere von 0° zur Umfangsrichtung verlaufen.

Diese zusätzliche Cordbahn 20 kann aus Aramid-Fasern, Polyamid-Fasern, Polyester-Fasern, Kunstseide-Fasern oder Stahlcord hergestellt werden.

Details dieser zusätzlichen Abdeckbahn können der parallelen Patentanmeldung der Anmelderin, die am gleichen Tag hinterlegt wurde, entnommen werden.

METZELER KAUTSCHUK GMBH          MK 130 P 82 EP
München

Patentansprüche

1. Luftreifen für Zweiradfahrzeuge, insbesondere Motorräder,
a) mit einer mehrlagigen Diagonalkarkasse und
b) mit einer Lauffläche,
d a d u r c h   g e k e n n z e i c h n e t ,   daß
c) unter der Lauffläche (22) mindestens zwei umlaufende,
   zur Reifenmitte (18) symmetrische Verstärkungsstreifen (14, 16) aus Cordmaterial angeordnet sind, deren
   Fäden in einem Winkel von 10 bis 30° zur Umfangsrichtung verlaufen.

2. Luftreifen nach Anspruch 1, dadurch gekennzeichnet, daß
die Verstärkungsstreifen (14, 16) vom Zenit des Luftreifens (10) bis maximal zu den Schultern reichen.

3. Luftreifen nach einem der Ansprüche 1 oder 2, dadurch
gekennzeichnet, daß das Cordmaterial der Verstärkungsstreifen (14, 16) Aramid, Polyester, Kunstseide, Polyamid oder
Stahlcord enthält.

4. Luftreifen nach einem der Ansprüche 1 bis 3, dadurch gekennzeichnet, daß sich die Verstärkungsstreifen (14, 16)
in der Reifenmitte (18) teilweise überlappen.

5. Luftreifen nach einem der Ansprüche 1 bis 4, dadurch gekennzeichnet, daß die Fäden in einem Winkel von ca. 25 °
zum Umfangsrichtung verlaufen.

6. Luftreifen nach einem der Ansprüche 1 bis 5, dadurch gekennzeichnet, daß die Fäden in den Verstärkungsstreifen (14, 16) auf den beiden Seiten der Reifenmitte (18) im gleichen Winkel zueinander verlaufen.

7. Luftreifen nach einem der Ansprüche 1 bis 6, dadurch gekennzeichnet, daß die Fäden aller Verstärkungsstreifen (14, 16) den gleichen Winkel und die gleiche Richtung haben.

8. Luftreifen nach einem der Ansprüche 1 bis 6, dadurch gekennzeichnet, daß die Fäden der Verstärkungsstreifen (14) auf einer Seite der Reifenmitte (18) spiegelsymmetrisch zur Reifenmitte (18) zu den Fäden der Verstärkungsstreifen (16) auf der anderen Seite verlaufen.

9. Luftreifen nach einem der Ansprüche 1 bis 6, dadurch gekennzeichnet, daß zwischen der Lauffläche (22) und den Verstärkungsstreifen (14, 16) symmetrisch zur Reifenmitte (18) mindestens eine Cordbahn (20) angeordnet ist, deren Fäden in einem Winkel von 0 bis 5 °, insbesondere von 0° zur Umfangsrichtung verlaufen.

10. Luftreifen nach Anspruch 9, dadurch gekennzeichnet, daß die Cordbahn (20) Aramide, Polyamide, Polyester, Kunstseide oder Stahl enthält.

FIG.1

FIG.2

1/2

0102005

FIG . 3

FIG . 4